# FASCICULE DE BREVET EUROPEEN

(11) **EP 1 447 210 B1**
(45) Date de publication et mention de la délivrance du brevet: **07.03.2007**
(21) Numéro de dépôt: 04002663.5
(22) Date de dépôt: 06.02.2004
(51) Int. Cl.: B29D 30/30

(54) **Mise en forme et pose d'une nappe de ceinture de pneumatique sur un support**
Formgebung und Anlegen einer Reifengürtellage auf eine Haltevorrichtung
Forming and applying a tyre belt ply on a support

(30) Priorité: 13.02.2003 FR 0301863
(43) Date de publication de la demande: 18.08.2004
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: Auclair, Jacques, 63800 Cournon D'Auvergne (FR)
(74) Mandataire: Bauvir, Jacques

(56) Documents cités:
- EP-A- 0 649 730
- US-A- 4 769 104
- US-A- 4 804 426
- US-A- 5 935 377

## Description

L'invention décrit un procédé et un moyen de mise en oeuvre du procédé permettant de mettre en forme et de déposer une nappe de ceinture de pneumatique sur un tambour de pose.

La fabrication de pneumatique à carcasse radiale impose de déposer généralement au cours de l'étape de réalisation et d'assemblage du pneu cru, un ensemble de nappes de ceintures dont la fonction est, parmi d'autres, d'assurer le bridage du sommet du pneumatique. Ces nappes de ceintures sont constituées de fils rectilignes, souvent métalliques, enrobés dans un mélange caoutchouteux, disposés parallèlement entre eux et faisant un angle déterminé avec la direction longitudinale de la nappe.
Les exigences de productivité et de qualité conduisent les fabricants de pneumatiques à rechercher depuis de nombreuses années les moyens permettant d'automatiser ces opérations de pose. Ainsi, s'est répandu l'usage qui consiste à déposer préalablement les nappes de ceintures sur des formes de pose généralement cylindriques et à ajuster manuellement bord à bord les fronts avant et arrière de la nappe, puis à saisir la ceinture de sommet ainsi réalisé à l'aide par exemple d'une virole de transfert et à l'amener sur un bandage préalablement conformé en forme de tore.
Mais la difficulté reste grande pour réaliser, sans l'intervention d'un opérateur qualifié, une jonction bord à bord des deux extrémités de nappe avec la précision compatible avec les exigences de qualité des pneumatiques modernes, en évitant les superpositions, les décalages ou les ouvertures.

Plusieurs méthodes permettant de réaliser automatiquement la dépose de la nappe de ceinture sur une forme cylindrique ont été dévoilées. Ces méthodes décrivent des appareils et des procédés ayant pour ambition de maîtriser tout à la fois la longueur de nappe, la géométrie angulaire du front de nappe et le positionnement de la nappe au moment de la pose.

Ainsi la publication US 4 769 104 propose un procédé comportant un ensemble de bras mobiles permettant d'aligner et de mettre en forme le front d'une nappe préalablement déposée sur un tapis magnétique. La forme nécessairement rectiligne des bras ne permet pas de corriger des fronts de nappes courbés. De plus, l'action successive des bras tend à modifier l'alignement précédemment réalisé de la lisière au moment de l'alignement du front, provoquant un décalage au niveau du rapprochement des deux extrémités de la nappe une fois déposée sur la forme.

La publication EP 0 649 730 fait état d'un procédé dans lequel la forme de la nappe est analysée par des caméras. Par comparaison avec une forme théorique prédéterminée, un automatisme détermine les déplacements transversaux à réaliser au moment de la dépose de la nappe depuis un tapis de déroulage vers un tapis magnétique. Ce système s'avère néanmoins peu performant pour corriger avec précision les écarts angulaires du front de nappe par rapport à une valeur pré établie.

La publication US 4 857 123 dévoile un procédé dans lequel la géométrie du front de nappe est évaluée en mesurant l'écart entre les positions successives d'un couteau flottant mobile dans le sens perpendiculaire au front de coupe, et une ligne de coupe théorique prédéterminée. La correction angulaire est effectuée par un manipulateur saisissant le front de nappe et effectuant une rotation contrôlée autour d'un axe perpendiculaire au plan de la nappe et passant sensiblement par le centre du front, faisant subir une correction angulaire identique à la pointe et au talon de la nappe. La publication US 5 092 946 améliore ce dernier procédé en proposant de déposer la nappe sur une succession de tapis magnétiques permettant de maintenir en position le front de nappe à chaque étape du cycle de pose. Ces procédés s'avèrent relativement efficaces pour corriger des fronts rectilignes mais ne permettent pas de juxtaposer bord à bord les deux extrémités de nappe présentant une courbure marquée des fronts sans provoquer de superposition, de décrochement ou d'ouverture.

La publication US 5 935 377 décrit quand à elle un dispositif de reprise des tensions de retrait dans un profilé dont le profil transversal comporte de fortes variations d'épaisseurs.

On observe que les difficultés rencontrées lors des tentatives d'automatisation de l'opération de juxtaposition des bords des deux extrémités de nappe, tiennent à la nature même du produit, qui présente une forte tendance à faire varier sa longueur et/ou l'angle des fils sous l'action d'une contrainte transversale ou longitudinale. De plus la libération des contraintes après la coupe a tendance à déformer le front de la nappe en courbant les fils de manière aléatoire particulièrement dans la zone de la pointe. On dit alors que la nappe rebique.

La présente invention se réfère à un procédé de pose d'une nappe de ceinture de pneumatique selon les étapes spécifiées dans la revendication 1.

La présente invention se réfère aussi à un transporteur mobile comprenant les caractéristiques selon la revendication 13.

Des formes avantageuses de l'invention font l'objet des revendications dépendantes.

La présente invention a pour objet d'apporter une solution simple aux problèmes posés depuis de nombreuses années par la maîtrise de la grande précision requise pour la mise en forme et la dépose d'une nappe de ceinture sur une forme de pose.
Il a été mis en lumière les avantages d'un procédé dans lequel les deux extrémités longitudinales de la nappe sont constituées chacune d'au moins trois secteurs de préhension, et caractérisé en ce que l'alignement des fronts avant et arrière se fait en déplaçant de manière indépendante au moins un secteur de préhension de chacune des zones avant et arrière.
Les secteurs de préhension des zones avant ou arrière sont saisis par autant d'ensembles de préhension disposés sur un transporteur mobile, et au moins un ensemble de préhension est équipé d'un correcteur de front de nappe permettant de déplacer de manière indépendante le secteur de préhension correspondant. Il devient alors possible, après avoir déterminé la géométrie angulaire du front de nappe à l'aide d'un dispositif approprié, d'aligner les orientations angulaires du front avant et du front arrière avec la précision souhaitée, même lorsque ces derniers présentent de fortes courbures, et d'atteindre et de reproduire les normes de qualité exigées par les pneumatiques modernes pour lesquels, il n'est pas toléré de superposition de nappe, les ouvertures entre les deux fronts ne doivent pas excéder le diamètre d'un fil et les décrochements doivent être inférieurs à 3 mm.

Les avantages et les caractéristiques détaillées d'un tel procédé apparaîtront à la lecture de la présente description et des exemples de mise en oeuvre du procédé conformément à l'invention, en référence aux schémas et dessins dans lesquels :
- La figure 1 décrit les différentes zones d'une nappe de ceinture,
- La figure 2 représente une vue schématique d'une nappe de ceinture à l'état naturel comparée à la forme géométrique théorique,
- La figure 3 représente une vue schématique de la forme des défauts de juxtaposition de deux fronts de nappe,
- La figure 4 représente une vue schématique générale de coté, d'une machine conforme au procédé,
- La figure 5 représente une vue schématique générale de dessus, d'une machine conforme au procédé,
- La figure 6 représente une vue schématique générale de face et de coté d'un transporteur avant conforme à l'invention,
- La figure 7 représente une vue schématique générale de dessus d'un transporteur avant conforme à l'invention,
- La figure 8 représente une vue schématique générale de dessus d'un transporteur arrière conforme à l'invention,
- La figure 9 représente une vue schématique d'une forme de pose présentant un profil cylindrique.
- La figure 10 représente une vue schématique d'une forme de pose présentant un profil galbé convexe.
- La figure 11 représente une vue schématique d'une forme de pose présentant un profil galbé concave.

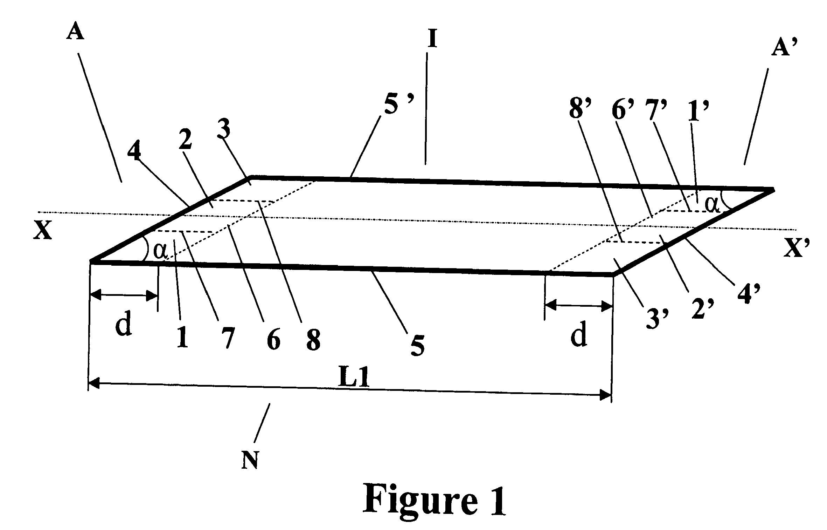

Dans ce qui suit, on désignera par les mêmes références les éléments identiques du procédé représentés sur les figures 1 à 11.

Une nappe de ceinture est constituée de fils rectilignes d'une longueur déterminée, généralement métalliques, enrobés dans un mélange caoutchouteux et disposés parallèlement entre eux en faisant un angle (α) déterminé avec la direction longitudinale de la nappe.

Selon les indications portées sur la figure 1, la nappe de ceinture (N) est bordée par deux lisières (5 et 5') et par les fronts avant et arrières (4 et 4'). Elle comprend un axe central longitudinal XX' parallèle et sensiblement équidistant des deux lisières 5 et 5'. La largeur de la nappe est égale à la distance entre les deux lisières. La nappe est ajustée à une longueur désirée (L1). Les fronts avant et arrière font un angle (α) avec la direction longitudinale de la nappe. L'angle (α) est généralement compris entre 15° et 65°.

A chacune des deux extrémités avant et arrière sont situées deux bandes transversales, en forme de parallélogramme, formant une zone avant (A) et une zone arrière (A'). Chacune de ces zones est délimitée par le front de nappe, respectivement (4 et 4'), une ligne imaginaire, respectivement (6 et 6') parallèle au front de nappe et situées à une distance (d) du front de nappe, et par les lisières (5 et 5'). La distance (d) est inférieure à 10 cm. La zone intermédiaire (I) est constituée par la longueur de nappe comprise entre les zones avant et arrière.

Chacune des zones, respectivement avant (A) et arrière (A'), est constituée d'au moins trois parties en forme de parallélogramme de taille sensiblement égales et formant des secteurs de préhension. Chacun de ces secteurs est délimité par des lignes imaginaires longitudinales (7, 8, 7', 8'). Le nombre de secteurs de préhension est déterminé par la nature et la largeur de la nappe à poser, et se partage entre un secteur bordant la lisière faisant un angle (α) avec le front de nappe et dénommé la pointe (1, 1'), un certain nombre de secteurs intermédiaires et un secteur bordant la lisière faisant un angle (π-α) avec le front et dénommé le talon (3, 3'). La figure 1 illustre le cas où chacune des zones avant et arrière est partagée en trois secteurs de préhension formant la pointe, respectivement avant et arrière (1 et 1'), le secteur de préhension central, respectivement avant et arrière (2 et 2') et le talon, respectivement avant et arrière (3 et 3').

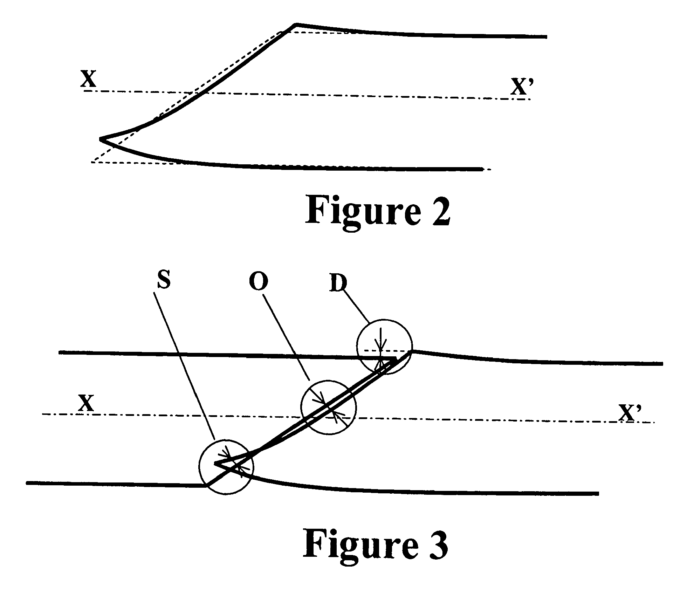

La figure 2 représente une zone avant ou arrière à l'état libre, c'est à dire lorsqu'elle n'est pas tenue par un système de préhension quelconque. On remarque, par comparaison avec une forme théorique idéale indiquée en pointillé, la déformation du front qui prend une allure curviligne, concave dans le cas illustré, provoquant le déplacement transversal de la pointe et du talon.
Dans ces conditions, on conçoit clairement, ainsi que le montre la figure 3, que de telles déformations sont susceptibles d'introduire des décalages (D) des ouvertures (O) ou des superpositions (S) des deux lignes de front avant et arrière au moment de leur juxtaposition bout à bout.

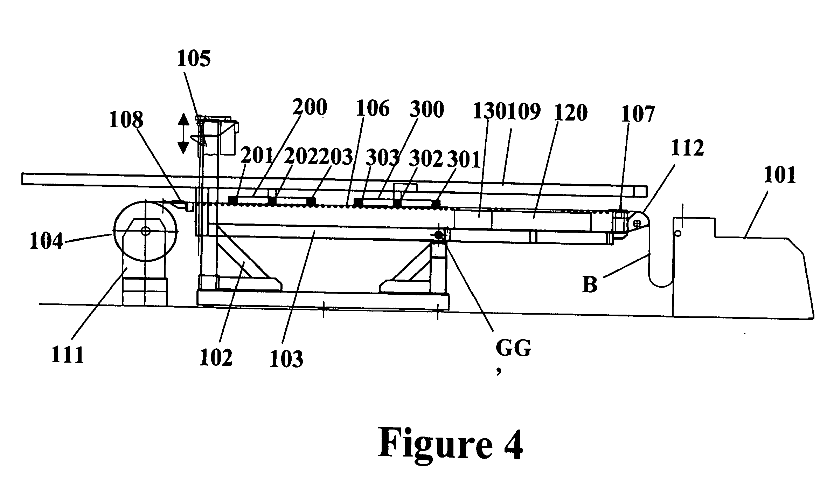

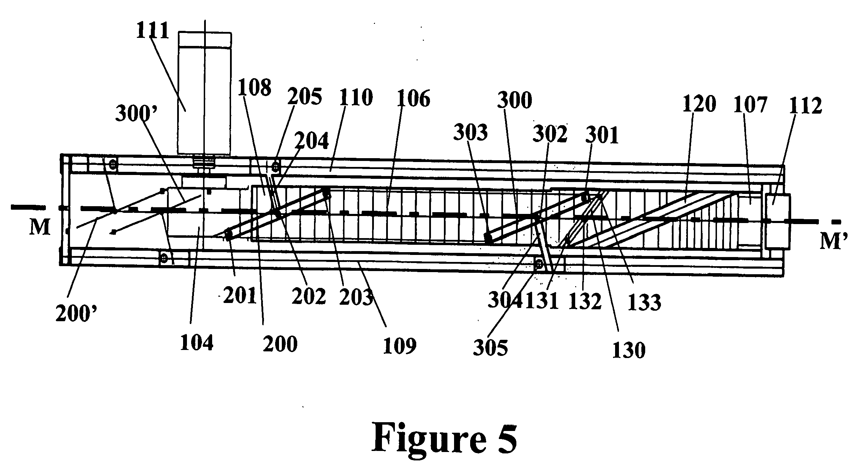

La figure 4 et la figure 5 représentent respectivement une vue générale de coté, et une vue générale de dessus d'une machine mettant en oeuvre le procédé conforme à l'invention et adaptée au cas où les zones avant et arrière de la nappe sont formées de trois secteurs de préhension. Cette machine est constituée d'un système d'approvisionnement (101) dans lequel est placée une bande continue de ceinture (B) de largeur et d'angle déterminé. Un bâti fixe (102) supporte un châssis métallique (103) sur lequel est monté un convoyeur à rouleau (106) dont les dimensions sont adaptées aux longueurs et aux largeurs des nappes de ceintures à manutentionner. Le convoyeur est entraîné par un moteur à positionnement (non représenté) permettant de dérouler ou de faire avancer dans le sens longitudinal la bande ou la nappe de ceinture d'une longueur précise et déterminée pour chaque séquence du cycle de pose.

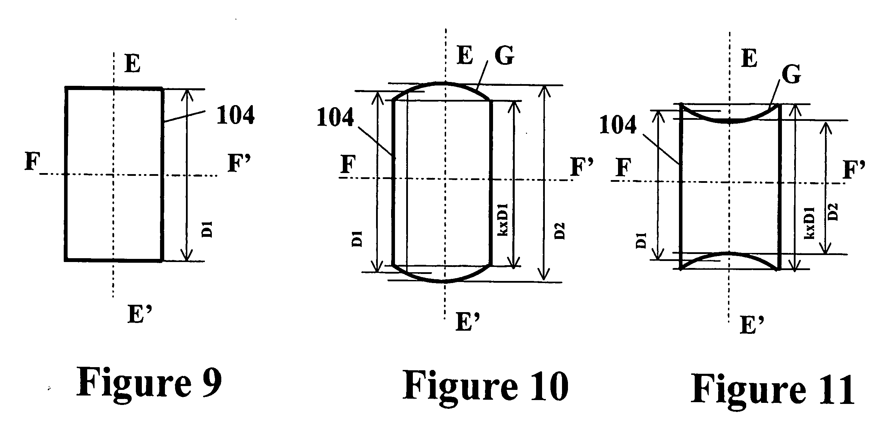

Une forme de pose (104), généralement cylindrique telle que schématisée sur la figure 9, soutenue par un bâti (111), est disposée en aval du convoyeur. Le diamètre D1 de la forme de la forme de pose est déterminé de manière à ce que la circonférence π x D1 soit adaptée à la dimension du pneumatique à réaliser. Un système de verrouillage mécanique (non représenté) permet d'aligner l'axe de la machine (MM') avec le plan équatorial (EE') de la forme de pose. La forme de pose est animée en rotation autour d'un axe (FF') par un moteur à positionnement (non représenté) permettant d'enrouler une longueur de nappe précise et déterminée pour chaque séquence du cycle de pose. La forme de pose comporte un dispositif magnétique ou pneumatique (non représenté) destiné à faire adhérer les zones avant et arrière sur la surface de la forme.

Un élévateur (105), actionné par un moteur électrique (non représenté), relève ou abaisse le plan du convoyeur en fonction du diamètre de la forme, en faisant effectuer au châssis métallique (103) une rotation autour de l'axe (GG'), de manière à rendre approximativement tangent le plan du convoyeur avec la forme de pose (104).

Un système de pré centrage (112) est disposé en entrée de convoyeur et permet d'aligner l'axe central longitudinal (XX') de la bande ou de la nappe de ceinture sur l'axe central longitudinal fixe de la machine (MM'). Des systèmes auto centreurs (107 et 108) disposés aux deux extrémités du convoyeur permettent de guider avec précision la bande ou la nappe de ceinture afin de conserver son alignement et son centrage par rapport à l'axe machine tout au long de la mise en oeuvre du procédé.

Un ensemble de coupe orientable conventionnel (120) à couteau flottant (non représenté) et tel que décrit par exemple dans la publication US 3 641 855 ou dans la publication FR 1 220 265, est disposé en tête du convoyeur. L'ensemble de coupe est orienté de manière à faire un angle (α) par rapport à l'axe longitudinal du convoyeur. Il permet de pratiquer une coupe entre deux fils d'une bande de ceinture continue (B) sans dégrader les fils adjacents au front de la nappe tout en tolérant un écart angulaire du front de nappe par rapport à l'angle (α) théorique. Une fois la bande coupée, on obtient une nappe de ceinture (N) de longueur (L1) déterminée, prête à être posée dans le cycle en cours du procédé. Des pinces latérales (non représentées) placées à proximité du front de coupe permettent de maintenir fermement en position pendant l'opération de coupe la zone arrière de la nappe destinée à être posée dans le cycle en cours du procédé et la zone avant de la nappe dont la pose correspondra à un cycle ultérieur du procédé.

Une ligne de détection fixe (130) disposée sous le plan de la nappe est placée en aval de l'ensemble de coupe. Elle est constituée de trois détecteurs optiques tels que par exemple des cellules laser rétro réfléchissantes référence LVH62 de la marque Keyence (131, 132 et 133) disposés le long d'un axe faisant un angle d'environ 45° par rapport à l'axe longitudinal du convoyeur. Le détecteur central (132) est placé approximativement à l'intersection de l'axe de la ligne de détection et de l'axe machine (MM'). Les deux détecteurs placés aux deux extrémités de la ligne de détection (131 et 132) sont disposés à équidistance de l'axe machine de telle manière qu'ils puissent être activés par le passage du front de nappe bordant respectivement la pointe et le talon de la nappe de ceinture. La distance, dans le sens transversal perpendiculaire à l'axe machine, séparant les détecteurs d'extrémité est ajustable et prédéterminée en fonction de la largeur de la nappe. A titre indicatif elle est inférieure d'environ une dizaine de centimètres à la largeur de la nappe. Préférentiellement on choisira de disposer les deux détecteurs d'extrémité à une distance transversale inférieure d'environ 5 cm à la largeur de nappe.

Des transporteurs avant et arrière (200 et 300) supportant des ensembles de préhension pilotables indépendants, permettent de saisir la zone avant et la zone arrière. Le nombre d'ensemble de préhension est déterminé par le nombre de secteurs de préhension partageant les zones avant et arrière et qui est égal à trois dans l'exemple proposé dans la présente description. Chacun des transporteurs comprend donc trois ensembles de préhension (201, 202 et 203) à l'avant (200), et trois ensembles de préhension (301, 302 et 303) à l'arrière (300), permettant de saisir respectivement la pointe, le secteur de préhension central et le talon avant, et la pointe, le secteur de préhension central et le talon arrière
Chacun des transporteurs respectivement avant et arrière est relié par des bras (204 et 304) à des trains mobiles (205 et 305) se translatant sur des rails de guidage longitudinaux (109 et 110). Ces trains mobiles sont équipés de moteurs à positionnement (non représentés) permettant de faire avancer le transporteur d'une longueur précise et déterminée pour chaque séquence du cycle de pose. La figure 5 montre schématiquement les positions extrêmes des transporteurs avant (200') et arrière (300') lors de la dépose de la pointe arrière sur la forme (104).

Un automatisme central de commande et de pilotage (non représenté) permet de déterminer les ordres d'animation des différents organes de la machine en fonction du cycle de pose, des valeurs de consigne, des valeurs mesurées et des algorithmes de correction. Il permet également, par une commande appropriée de leurs moteurs à positionnement respectifs, de synchroniser l'avance longitudinale du convoyeur, les déplacements longitudinaux des transporteurs et le déplacement circonférentiel de la forme de pose de manière à éviter des mises en tension et des déformations intempestives de la nappe.

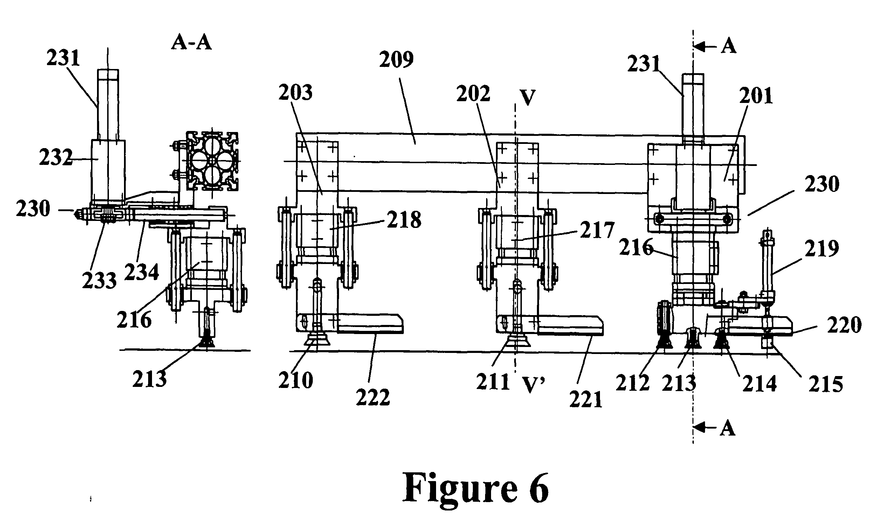

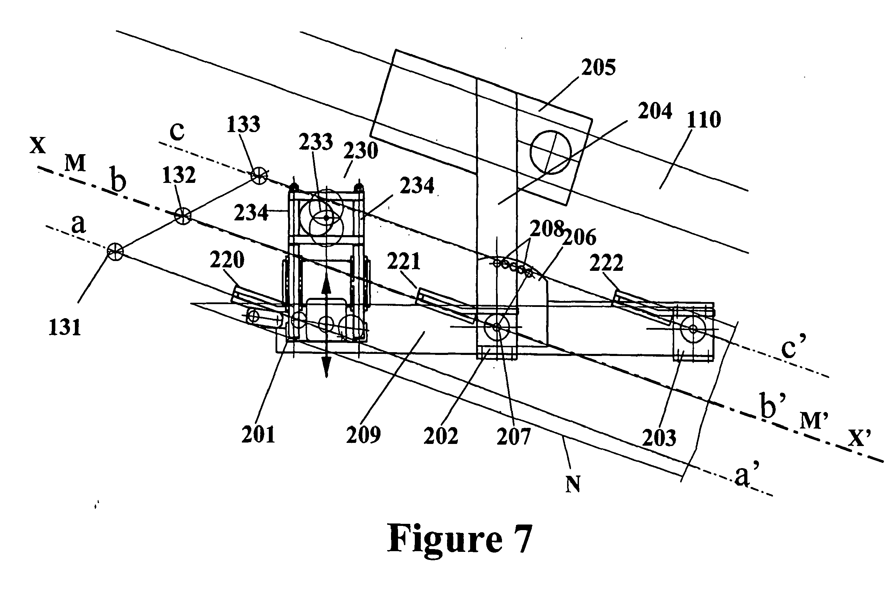

La figure 6 et la figure 7 montrent une vue schématique partielle de face, une coupe transversale selon A-A et une vue schématique de dessus, d'un transporteur avant conforme au procédé. Un bras (204) est fixé par une de ses extrémités au train mobile motorisé (205) et supporte par l'autre extrémité une traverse pivotante (209). Une plaque de fixation indexable (206) permet de fixer la traverse (209) par son centre sur le bras (204). Cette plaque de fixation, solidaire de la traverse (209), comporte un point d'attache central (207) disposé au milieu de la traverse et un ensemble de points d'attaches (208) prédisposés de manière à pouvoir fixer la traverse sur le bras avec une orientation sensiblement parallèle au front de la nappe et faisant un angle (α) avec l'axe machine (MM'), en la faisant pivoter autour d'un axe (VV') perpendiculaire au plan du convoyeur et passant par le centre du point d'attache central (207).

La traverse (209) supporte deux ensembles de préhension non corrigés (202 et 203) et un ensemble de préhension (201) équipé d'un correcteur de front de nappe (230). Ces organes peuvent comporter une ou plusieurs ventouses pneumatiques (210), (211) et (212, 213 et 214) ou encore un aimant (215). Chaque ensemble de préhension est équipé d'un vérin de monte et baisse (216, 217 et 218) permettant de mettre en contact les ventouses avec la partie supérieure de la nappe. On remarquera que l'ensemble de préhension saisissant la pointe (201) comporte plusieurs ventouses (212, 213 et 214) ainsi qu'un aimant (215) s'abaissant ou se relevant sous l'action d'un vérin pneumatique (219). Ce dispositif permet de saisir la partie effilée de la pointe en plusieurs points de manière à maintenir fermement ce secteur de la nappe susceptible de subir des déplacements importants.
A titre indicatif et dans le but de simplifier les algorithmes de correction, on s'arrange pour aligner l'axe (VV') avec le centre de la ventouse (211) et à faire passer cet axe par l'axe machine (MM').
L'ensemble de préhension (201) est équipé d'un correcteur de front de nappe pilotable (230). Placé entre la traverse et l'ensemble de préhension, ce correcteur est composé d'un moteur à positionnement (231), d'un réducteur (232), d'un excentrique (233) et de coulisses (234) permettant, sous l'action du moteur et de l'excentrique, de déplacer l'ensemble de préhension (201) d'une valeur de correction déterminée dans une direction donnée et, dans le cas de la présente description, sensiblement perpendiculaire au front de nappe.

Des réflecteurs (220, 221 et 222) sont alignés par rapport aux axes longitudinaux respectivement (aa', bb' et cc') passant par le centre des détecteurs optiques respectivement (131, 132 et 133). Toujours dans le but simplifier les algorithmes on s'arrangera pour faire coïncider l'axe (bb') avec l'axe machine (MM'). Ces réflecteurs, placés au-dessus du front de nappe et débordant longitudinalement vers l'extérieur de la nappe, permettent aux détecteurs optiques de déterminer avec précision le passage du front de nappe.

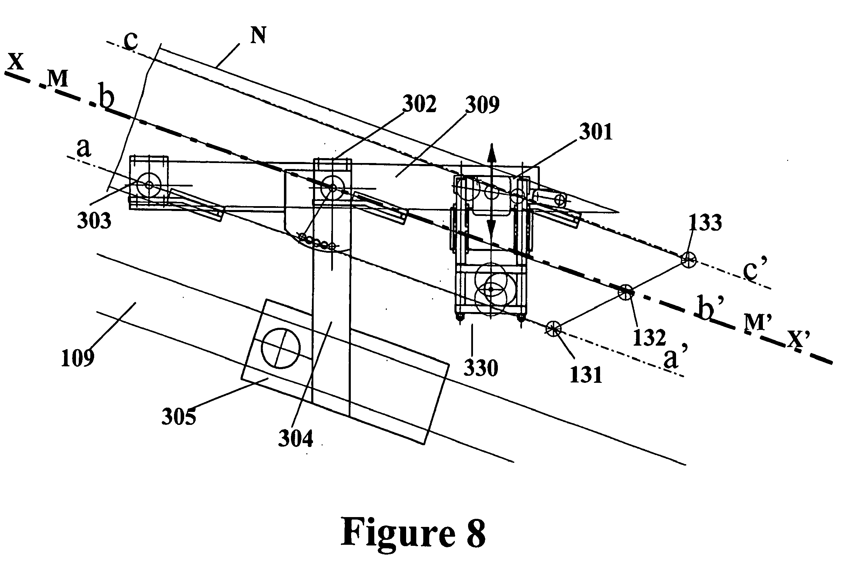

La figure 8 représente une vue schématique de dessus d'un transporteur arrière (300) conforme à l'invention. Semblable au transporteur avant (200) il comporte une traverse pivotante (309) sur laquelle sont fixés deux ensembles de préhension non corrigés permettant de saisir le secteur de préhension central arrière (302) et le talon arrière (303) ainsi qu'un ensemble de préhension de la pointe arrière (301) comportant plusieurs ventouses et un aimant, et équipé d'un correcteur de front de nappe pilotable (330). Un bras (304) relie la traverse au train mobile (305).

Cette description, donnée à titre non limitatif, d'une machine conforme au procédé peut faire l'objet de multiples aménagements permettant d'adapter le procédé au type et à la dimension des nappes à manipuler. Il est ainsi possible d'augmenter le nombre d'ensembles de préhension, d'équiper le transporteur de plusieurs ensembles de préhension munis d'un correcteur de front de nappe, de faire varier le nombre et la taille des ventouses ou des aimants placés sur les ensembles de préhension, de disposer de plusieurs lignes de détection, d'accroître le nombre de détecteurs par ligne de détection, de positionner dans des alignements différents les détecteurs et les ensembles de préhension.
Une simplification de la construction du transporteur peut consister par exemple à remplacer les ensembles de préhension non équipés de correcteurs de front et situées cote à cote par une barrette équipée d'un vérin de monte et baisse et comportant autant de ventouses ou d'aimants que nécessaires, de manière à saisir simultanément les secteurs de préhension qu'il est prévu de maintenir fixes pendant l'opération d'alignement des fronts. Il est également possible de piloter le correcteur de front de nappe en lui faisant décrire un mouvement transversal dans une direction différente, par exemple perpendiculaire à la lisière de la nappe ou à la bissectrice de l'angle fait par le front de nappe et la lisière. On peut encore envisager de faire effectuer au correcteur de front de nappe un mouvement circulaire autour d'un axe judicieusement choisi et perpendiculaire au plan de la nappe.

L'homme du métier pourra facilement configurer en conséquence l'automatisme de pilotage et les algorithmes de correction.

A titre illustratif, la présente description détaille un procédé conforme à l'invention et mettant en oeuvre une machine telle que décrite précédemment et comprenant un transporteur avant et un transporteur arrière équipés chacun de trois ensembles de préhension et dont les ensembles de préhension saisissant respectivement la pointe avant et arrière sont munis d'un correcteur de front.
Ce procédé comprend les étapes suivantes :
- dérouler sur le convoyeur (106) une bande de ceinture continue (B) depuis le système d'approvisionnement (101), en passant successivement par le système de pré centrage (112) et par le système auto centreur (107) de manière à aligner l'axe (XX') de la bande sur l'axe machine (MM'),
- couper la bande de ceinture à l'aide de l'ensemble de coupe (120) le long d'une ligne parallèle aux fils de nappes, de manière à dégager le front avant (4),
- saisir la zone avant (A) à l'aide des ensembles de préhension (201, 202 et 203) situés sur le transporteur avant (200),
- dérouler, une longueur prédéterminée (L1) de bande de ceinture (B),
- détecter le passage des différentes zones du front avant au droit des cellules laser rétro réfléchissantes (131, 132 et 133) située dans la ligne de détection (130) ; connaissant la position des cellules, et les longueurs de nappe déroulées entre la détection des fronts de chacun des secteurs de préhension de la zone avant, il est possible de déterminer la géométrie angulaire du front avant (4) et en particulier d'en estimer la courbure,
- saisir la zone arrière (A') à l'aide des ensembles de préhension (301, 302 et 303) situés sur le transporteur arrière (300),
- couper la bande de ceinture le long d'une ligne parallèle aux fils de nappes de manière à dégager le front arrière (4') et obtenir une nappe de ceinture (N),
- avancer la nappe de ceinture,
- déterminer la géométrie angulaire du front arrière (4') au passage au travers de la ligne de détection,
- aligner le front avant (4) et le front arrière (4') en déplaçant respectivement la pointe avant et la pointe arrière à l'aide des correcteurs de front (230 et 330) disposés sur les systèmes de préhensions saisissant respectivement la pointe avant (201) et la pointe arrière (301) en maintenant fixes les ensembles de préhension saisissant respectivement le secteur de préhension central avant (202), le talon avant (203), le secteur de préhension central arrière (302) et le talon arrière (303), les valeurs de correction pouvant être calculées en fonction de l'écart entre les géométries angulaires des fronts avant et arrière ou, en fonction de l'écart entre les géométries angulaires mesurées pour chacun des fronts avant et arrière et une valeur angulaire de référence prédéterminée correspondant par exemple à l'angle (α),
- approcher la forme de pose (104) en alignant l'axe de la machine (MM') avec le plan équatorial (EE') de la forme,
- déposer la zone avant (A), sur la forme de pose,
- enrouler la zone intermédiaire (I) autour de la forme de pose,
- déposer la zone arrière (A') sur la forme de pose.

La dépose de la zone avant (A) sur la forme de pose (104) se fait en appliquant et en faisant adhérer successivement les parties de la nappe correspondant à la pointe avant (1), au secteur de préhension central avant (2) et au talon avant (3), en activant le dispositif magnétique ou pneumatique de la forme de pose permettant de faire adhérer la zone avant sur la surface de la forme, et en relâchant successivement les ensembles de préhension saisissant respectivement la pointe avant (201), le secteur de préhension central avant (202) et le talon avant (203). De même la dépose de la zone arrière (A') sur la forme de pose (104) se fait en appliquant et en faisant adhérer successivement les parties de la nappe correspondant au talon arrière (3'), au secteur de préhension central arrière (2') et à la pointe arrière (1'), en activant le dispositif magnétique ou pneumatique de la forme de pose permettant de faire adhérer la zone arrière sur la surface de la forme et en relâchant successivement les ensembles de préhension saisissant respectivement le talon arrière (303), le secteur de préhension central (302) et la pointe arrière (301).

Ce procédé tel qu'il vient d'être décrit permet toutes sortes d'adaptations :

Il est ainsi possible de corriger la longueur de la nappe en évaluant la distance entre le front de la pointe avant et le front du talon arrière, la distance entre le front du secteur de préhension central avant et le front du secteur de préhension central arrière, et la distance entre le front du talon avant et le front de la pointe arrière et en les comparants avec une longueur de référence prédéterminée. L'ajustement de la longueur de la nappe peut s'opérer soit en déplaçant longitudinalement et dans des sens opposés les deux transporteurs (200 et 300) des valeurs de correction désirées, soit en modifiant dans un rapport calculé à cet effet la synchronisation de l'avance du convoyeur et des transporteurs par rapport à la rotation de la forme de pose.

Néanmoins, un des avantages substantiels du procédé, est la pose de nappe de ceinture sur une forme présentant un sommet galbé (G), convexe ou concave, tels que schématisés sur les figures 10 et 11. La forme à galbe convexe, figure 10, se caractérise par un petit diamètre (D1) aux bords et un grand diamètre (D2) à l'équateur, celle à galbe concave, figure 11, se caractérise par un grand diamètre aux bords (D2) et un petit diamètre (D1) à l'équateur.
Ces deux configurations imposent de compenser une partie des différences entre le grand et le petit diamètre. Pour obtenir ce résultat, on détermine une longueur déroulée de la nappe de ceinture (L1) proche de la circonférence la plus faible (n x D1) et, en déplaçant longitudinalement les transporteurs dans des directions opposées, on étire la nappe de manière à amener sa longueur à une valeur (L2) judicieusement choisie, et telle que le rapport k = L2/L1 soit compris entre 1 et D2/D1. Ce coefficient k est déterminé expérimentalement en fonction de la nature du tissu et de l'importance du galbe. On effectue alors l'alignement des fronts de nappes en ajoutant aux valeurs de correction déterminées par l'analyse des géométries angulaires mesurées pour chacun des fronts avant et arrière une valeur prédéterminée permettant de compenser les variations angulaires introduites par le galbe et la mise en tension de la nappe.

On peut également envisager la pose d'une nappe dont le front fait un angle (α) avec la direction longitudinale supérieur à 65° et pouvant aller jusqu'à 90°. Pour cette dernière valeur, correspondant généralement à une nappe de renfort destinée à la réalisation d'un pneumatique à carcasse radiale, les ensembles de préhension équipés d'un correcteur de front seront disposés préférentiellement aux angles diagonalement opposés de la nappe. Pour plus de précision dans la maîtrise de la radialité des fronts on pourra équiper d'un correcteur de front les ensembles de préhension saisissant les secteurs situés en bordure des lisières de la nappe. Le calcul des valeurs de correction est aménagé en conséquence.

Une autre adaptation consiste à effectuer le mouvement de correction de la pointe en relâchant un ou plusieurs ensembles de préhension saisissant les secteurs de préhension situés entre la pointe et le talon, tout en maintenant fixe l'ensemble de préhension saisissant le talon.

Il peut aussi s'avérer pratique de mettre en oeuvre le procédé en utilisant un seul transporteur. Ce transporteur pourra au choix :
- comporter deux ensembles de préhension équipés de correcteur de front de nappe et saisissant respectivement la pointe et le talon, et d'un ensemble de préhension non corrigé saisissant le secteur de préhension central ou,
- être muni d'une traverse pivotante de 180° autour de son axe central (VV'), les mêmes ensembles de préhension équipés ou non d'un correcteur de front pouvant alors saisir successivement les secteurs symétriquement semblables de la zone avant et de la zone arrière

Dans ces conditions le cycle de pose est adapté de la manière suivante :
- dérouler sur un convoyeur (106) une bande de ceinture continue (B) depuis un système d'approvisionnement (101),
- couper la bande de ceinture (B) le long d'une ligne parallèle aux fils de nappes, de manière à dégager le front avant (4),
- saisir la zone avant (A), à l'aide des ensembles de préhension situés sur le transporteur,
- dérouler la bande de ceinture,
- déterminer la géométrie angulaire du front avant (4) au passage au travers d'une ligne de détection fixe (130),
- aligner le front avant (4),
- approcher la forme de pose (104),
- déposer la zone avant (A), sur la forme de pose,
- poursuivre le déroulement de la bande de ceinture (B), jusqu'à obtenir une longueur de nappe prédéterminée (L1), tout en continuant à enrouler la zone intermédiaire (I) autour de la forme de pose,
- saisir la zone arrière (A'), à l'aide des ensembles de préhension situés sur le transporteur,
- couper la bande de ceinture (B) le long d'une ligne parallèle aux fils de nappes de manière à dégager le front arrière (4') et obtenir une nappe de ceinture (N),
- avancer la nappe de ceinture, tout en continuant à enrouler la zone intermédiaire (I) autour de la forme de pose,
- déterminer la géométrie angulaire du front arrière (4') au passage au travers de la ligne de détection fixe,
- aligner le front arrière (4'),
- finir d'enrouler la zone intermédiaire (I) autour de la forme de pose,
- déposer la zone arrière (A') sur la forme de pose.

Un autre aménagement du procédé consiste à intercaler un tapis magnétique d'une longueur au moins égale à la longueur de la nappe de ceinture, entre la forme de pose et le convoyeur. Ce dispositif s'avère intéressant pour améliorer le temps de cycle dans le cas où on ne disposerait que d'un seul transporteur. Après avoir effectué les corrections du front avant et du front arrière, le transporteur dépose la nappe de ceinture sur le tapis magnétique. Au moment du cycle désiré, la nappe est déposée et enroulée autour de la forme.

## Revendications

1. Procédé de pose d'une nappe de ceinture de pneumatique sur une forme généralement cylindrique (104), la nappe comprenant, une zone avant (A), une zone arrière (A'), et une zone intermédiaire (I), les zones avant et arrière étant bordées par un front respectivement avant et arrière (4 et 4'), chacune des zones avant et arrière étant formée d'au moins trois secteurs de préhension (1, 2, 3 et 1',2', 3'), dont une pointe (1, 1') et un talon (3, 3'), **caractérisé en ce que** l'alignement des fronts avant et arrière se fait en déplaçant de manière indépendante au moins un secteur de préhension de chacune des zones avant et arrière d'une valeur de correction variable et déterminée préalablement par la mesure lors du passage des fronts au travers d'une ligne de détection fixe (130) des géométries angulaires des fronts avant et arrière.

2. Procédé selon la revendication 1 dans lequel la valeur de correction est déterminée en fonction de l'écart entre les géométries angulaires des fronts avant et arrière

3. Procédé selon la revendications 1, dans la lequel la valeur de correction est déterminée en fonction de l'écart entre les géométries angulaires mesurées pour chacun des fronts avant et arrière et une valeur angulaire de référence prédéterminée.

4. Procédé selon 1 revendication 1, dans lequel les secteurs de préhension des zones avant ou arrière sont saisis par autant d'ensembles de préhension (201, 202, 203, 301, 302, 303) disposés sur un transporteur mobile (200, 300), et dans lequel au moins un ensemble de préhension (201, 301) est équipé d'un correcteur de front de nappe (230, 330) permettant de déplacer de manière indépendante le secteur de préhension correspondant.

5. Procédé selon la revendication 4, mettant en oeuvre un transporteur avant (200) et un transporteur arrière (300), et comprenant les étapes suivantes :
- dérouler sur un convoyeur (106) une bande de ceinture continue (B) depuis un système d'approvisionnement (101),
- couper la bande de ceinture (B) le long d'une ligne parallèle aux fils de nappes, de manière à dégager le front avant (4),
- saisir la zone avant (A) à l'aide des ensembles de préhension (201, 202, 203) disposés sur le transporteur avant (200),
- dérouler une longueur (L1) prédéterminée de bande de ceinture,
- déterminer la géométrie angulaire du front avant (4) au passage au travers de la ligne de détection fixe (130),
- saisir la zone arrière (A') à l'aide des ensembles de préhension (301, 302, 303) disposés sur le transporteur arrière (300),
- couper la bande de ceinture le long d'une ligne parallèle aux fils de nappes de manière à dégager le front arrière (4') et obtenir une nappe de ceinture (N),
- avancer la nappe de ceinture,
- déterminer la géométrie angulaire du front arrière (4') au passage au travers de la ligne de détection fixe (130),
- aligner le front avant (4) et le front arrière (4'),
- approcher la forme de pose (104),
- déposer la zone avant (A), sur la forme de pose,
- enrouler la zone intermédiaire (I) autour de la forme de pose,
- déposer la zone arrière (A'), sur la forme de pose.

6. Procédé selon la revendication 4, mettant en oeuvre un seul transporteur, et comprenant les étapes suivantes :
- dérouler sur un convoyeur (106) une bande de ceinture continue (B) depuis un système d'approvisionnement (101),
- couper la bande de ceinture (B) le long d'une ligne parallèle aux fils de nappes, de manière à dégager le front avant (4),
- saisir la zone avant (A), à l'aide des ensembles de préhension disposés sur le transporteur,
- dérouler la bande de ceinture,
- déterminer la géométrie angulaire du front avant (4) au passage au travers de la ligne de détection fixe (130),
- aligner le front avant (4),
- approcher la forme de pose (104),
- déposer la zone avant (A), sur la forme de pose,
- poursuivre le déroulement de la bande de ceinture (B), jusqu'à obtenir une longueur de nappe prédéterminée (L1), tout en continuant à enrouler la zone intermédiaire (I) autour de la forme de pose,
- saisir la zone arrière (A'), à l'aide des ensembles de préhension disposés sur le transporteur,
- couper la bande de ceinture (B) le long d'une ligne parallèle aux fils de nappes de manière à dégager le front arrière (4') et obtenir une nappe de ceinture (N),
- avancer la nappe de ceinture, tout en continuant à enrouler la zone intermédiaire (I) autour de la forme de pose,
- déterminer la géométrie angulaire du front arrière (4') au passage au travers de la ligne de détection fixe (130),
- aligner le front arrière (4'),
- finir d'enrouler la zone intermédiaire (I) autour de la forme de pose,
- déposer la zone arrière (A') sur la forme de pose.

7. Procédé selon une des revendications 5 ou 6 dans lequel les avances du convoyeur et des transporteurs sont synchronisées avec la rotation de la forme de pose.

8. Procédé selon la revendication 5 dans lequel la longueur de la nappe est ajustée en déplaçant longitudinalement et dans des sens opposés les deux transporteurs des valeurs de correction désirées.

9. Procédé selon une des revendications 5 ou 6 dans lequel la longueur de la nappe est ajustée en modifiant dans un rapport donné la synchronisation de l'avance du convoyeur et des transporteurs par rapport à la rotation de la forme de pose.

10. Procédé selon une des revendications 5 ou 6 dans lequel la forme de pose présente un sommet galbé (G) ayant un grand diamètre (D2) et un petit diamètre (D1), comprenant les étapes suivantes :
- dérouler et couper la bande de ceinture pour obtenir une nappe (N) d'une longueur prédéterminée (L1) proche de la circonférence la plus faible (n x D1),
- mettre la nappe en tension par étirement jusqu'à une longueur (L2) telle que le rapport k = L2/L1 soit compris entre 1 et D2/D1,
- effectuer l'alignement des fronts de nappes en ajoutant aux valeurs de correction déterminées par l'analyse des géométries angulaires mesurées pour chacun des fronts avant et arrière une valeur prédéterminée permettant de compenser les variations angulaires introduites par le galbe et la mise en tension de la nappe.

11. Procédé selon une des revendications 5 ou 6 dans lequel les zones avant (A) et arrière (A') sont partagées en seulement trois secteurs de préhension formant respectivement la pointe (1 et 1') le secteur de préhension central (2 et 2') et le talon (3 et 3'), et dans lequel seul l'ensemble de préhension saisissant la pointe (201, 301) est équipé d'un correcteur de front (230, 330) permettant d'ajuster le front de la nappe en déplaçant la pointe de la nappe de manière indépendante tout en maintenant fixes les ensembles de préhension saisissant le secteur de préhension central et le talon (202, 302, 203, 303).

12. Procédé selon une des revendications 5 ou 6 dans lequel la nappe de ceinture est déposée préalablement sur un tapis intermédiaire magnétique, puis du tapis magnétique sur la forme de pose.

13. Transporteur mobile (200, 300) selon l'axe longitudinal (XX') d'un convoyeur (106) comprenant au moins trois ensembles de préhension (201, 202, 203, 301, 302, 303) animés d'un mouvement de monte et baisse selon un axe perpendiculaire au plan de la nappe posée sur le convoyeur, placés sur une traverse pivotante (209, 309), et disposés de telle sorte qu'ils permettent de saisir et de relâcher respectivement la pointe (1, 1'), le secteur de préhension central (2, 2') et le talon (3, 3') partageant le front d'une nappe de ceinture, **caractérisé en ce que** seul l'ensemble de préhension (201, 301) destiné à saisir le secteur de la pointe (1, 1') de la nappe est équipé d'un correcteur de front de nappe (230, 330) permettant de déplacer cet ensemble de préhension dans un plan parallèle au plan de la nappe posée sur le convoyeur, de manière indépendante des autres ensembles de préhension et d'une valeur de correction dont l'amplitude est pilotable.

14. Transporteur selon la revendication 13, **caractérisé en ce que** le correcteur de front de nappe effectue un mouvement rectiligne selon une direction comprise entre une direction sensiblement perpendiculaire à l'axe longitudinal (XX') et une direction sensiblement perpendiculaire au front de nappe.

15. Transporteur selon la revendication 13, **caractérisé en ce que** le correcteur de front de nappe effectue un mouvement circulaire autour d'un axe sensiblement perpendiculaire au plan de la nappe posée sur le convoyeur.

16. Transporteur selon la revendication 13 **caractérisé en ce que** la traverse pivotante (209, 309) effectue une rotation de 180° autour d'un axe (VV') perpendiculaire au plan du convoyeur et passant par le point d'attache de la traverse (207, 307).

17. Transporteur selon la revendication 13, **caractérisé en ce que** l'ensemble de préhension comprend une ou plusieurs ventouses pneumatiques.

18. Transporteur selon la revendication 13, **caractérisé en ce que** l'ensemble de préhension comprend un ou plusieurs électro-aimants.

## Claims

1. Method of laying a tyre belt ply on a generally cylindrical form (104), the ply comprising a front area (A), a rear area (A'), and an intermediate area (I), the front and rear areas being bordered by a respectively front and rear edge (4 and 4'), each of the front and rear areas being formed by at least three gripping sectors (1, 2, 3 and 1', 2', 3'), including a toe (1, 1') and a heel (3, 3'), **characterised in that** the alignment of the front and rear edges is effected by moving independently at least one gripping sector of each of the front and rear areas by a variable correction value determined previously by the measurement, when the edges pass across a fixed detection line (130), of the angular geometries of the front and rear edges.

2. Method according to Claim 1, in which the correction value is determined according to the difference between the angular geometries of the front and rear edges.

3. Method according to Claim 1, in which the correction value is determined according to the difference between the angular geometries measured for each of the front and rear edges and a predetermined reference angular value.

4. Method according to Claim 1, in which the gripping sectors of the front or rear areas are gripped by the same number of gripping assemblies (201, 202, 203, 301, 302, 303) disposed on a movable transporter (200, 300) and in which at least one gripping assembly (201, 301) is equipped with a ply edge corrector (230, 330) for moving the corresponding gripping sector independently.

5. Method according to Claim 4, using a front transporter (200) and a rear transporter (300), and comprising the following steps:
- unwinding onto a conveyer (106) a continuous strip of belt (B) from a feed system (101),
- cutting the belt strip (B) along a line parallel to the ply cords, so as to leave the front edge (4) clear,
- gripping the front area (A) by means of the gripping assemblies (201, 202, 203) situated on the front transporter (200),
- unwinding a predetermined length (L1) of belt strip,
- determining the angular geometry of the front edge (4) on passing across the fixed detection line (130),
- gripping the rear area (A') by means of the gripping assemblies (301, 302, 303) situated on the rear transporter (300),
- cutting the strip of belt along a line parallel to the ply cords so as to leave clear the rear edge (4') and obtain a belt ply (N),
- advancing the belt ply,
- determining the angular geometry of the rear edge (4') on passing across the fixed detection line (130),
- aligning the front edge (4) and the rear edge (4'),
- bringing the laying form (104) closer,
- depositing the front area (A) on the laying form,
- winding the intermediate area (I) around the laying form,
- depositing the rear area (A') on the laying form.

6. Method according to Claim 4, using a single transporter, and comprising the following steps:
- unwinding a continuous belt strip (B), on a conveyer (106) from a feed system (101),
- cutting the belt strip (B) along a line parallel to the ply cords, so as to leave the front edge (4) clear,
- gripping the front area (A), by means of the gripping assemblies situated on the transporter,
- unwinding the belt strip,
- determining the angular geometry of the front edge (4) on passing across the fixed detection line (130),
- aligning the front edge (4),
- bringing the laying form (104) closer,
- depositing the front area (A) on the laying form,
- continuing the unwinding of the belt strip (B) until a predetermined ply length (L1) is obtained, whilst continuing to wind up the intermediate area (I) around the laying form,
- gripping the rear area (A') by means of the gripping assemblies situated on the transporter,
- cutting the belt strip (B) along a line parallel to the ply cords, so as to leave the rear edge (4') clear and obtain a belt ply (N),
- advancing the belt ply whilst continuing to wind up the intermediate area (I) around the laying form,
- determining the angular geometry of the rear edge (4') on passing across the fixed detection line (130),
- aligning the rear edge (4'),
- finishing winding up the intermediate area (I) around the laying form,
- depositing the rear area (A') on the laying form.

7. Method according to one of Claims 5 or 6, in which the advances of the conveyer and transporters are synchronised with the rotation of the laying form.

8. Method according to Claim 5, in which the length of the ply is adjusted by moving the two transporters longitudinally and in opposite directions by the required correction values.

9. Method according to one of Claims 5 or 6, in which the length of the ply is adjusted by modifying, in a given ratio, the synchronisation of the advance of the conveyer and transporters with respect to the rotation of the laying form.

10. Method according to one of Claims 5 or 6, in which the laying form has a curved crown (G) having a large diameter (D2) and a small diameter (D1), comprising the following steps:
- unwinding and cutting the belt strip in order to obtain a ply (N) of predetermined length (L1) close to the smallest circumference (π x D1),
- putting the ply under tension by stretching to a length (L2) such that the ratio k = L2/L1 is between 1 and D2/D1,
- effecting the alignment of the ply edges by adding to the correction values determined by the analysis of the angular geometries measured for each of the front and rear edges a predetermined value for compensating for the angular variations introduced by the curve and the tensioning of the ply.

11. Method according to one of Claims 5 or 6, in which the front (A) and rear (A') areas are divided into only three gripping sectors forming respectively the toe (1 and 1'), the central gripping sector (2 and 2') and the heel (3 and 3'), and in which only the gripping assembly gripping the toe (201, 301) is equipped with an edge corrector (230, 330) for adjusting the edge of the ply by moving the toe of the ply independently whilst keeping fixed the gripping assemblies gripping the central gripping sector and the heel (202, 302, 203, 303).

12. Method according to one of Claims 5 or 6, in which the belt ply is deposited in advance on an intermediate magnetic belt, and then from the magnetic belt on the laying form.

13. Transporter (200, 300) able to move along the longitudinal axis (XX') of a conveyer (106), comprising at least three gripping assemblies (201, 202, 203, 301, 302, 303) driven in a rising and falling movement on an axis perpendicular to the plane of the ply placed on the conveyer, placed on a pivoting cross-member (209, 309), and disposed so that they make it possible to grip and release the toe (1, 1'), the central gripping sector (2, 2') and the heel (3, 3') sharing the edge of a belt ply, **characterised**
**in that** only the gripping assembly (201, 301) intended to grip the toe sector (1, 1') of the ply is equipped with a ply edge corrector (230, 330) for moving the gripping assembly in a plane parallel to the plane of the ply placed on the conveyer, independently of the other gripping assemblies and by a correction value whose magnitude is controllable.

14. Transporter according to Claim 13, **characterised in that** the ply edge corrector makes a rectilinear movement in a direction lying between a direction substantially perpendicular to the longitudinal axis (XX') and a direction substantially perpendicular to the ply edge.

15. Transporter according to Claim 13, **characterised in that** the ply edge corrector makes a circular movement about an axis substantially perpendicular to the plane of the ply placed on the conveyer.

16. Transporter according to Claim 13, **characterised in that** the pivoting cross-member (209, 309) effects a rotation of 180° about an axis (VV') perpendicular to the plane of the conveyer and passing through the point of attachment of the cross-member (207, 307).

17. Transporter according to Claim 13, **characterised in that** the gripping assembly comprises one or more pneumatic suckers.

18. Transporter according to Claim 13, **characterised in that** the gripping assembly comprises one or more electromagnets.

## Patentansprüche

1. Verfahren zum Auflegen einer Luftreifengürtellage auf eine allgemein zylindrische Form (104), wobei die Lage einen vorderen Bereich (A), einen hinteren Bereich (A') und einen Mittelbereich (I) aufweist, der vordere Bereich und der hintere Bereich von einer vorderen bzw. hinteren Stirnseite (4 und 4') begrenzt werden, wobei der vordere und hintere Bereich jeweils aus mindestens drei Greifsektoren (1, 2, 3 und 1', 2'., 3') gebildet wird, darunter einer Spitze (1, 1') und einem Ansatz (3, 3'), **dadurch gekennzeichnet, dass** das Ausrichten der vorderen und hinteren Stirnseite dadurch erfolgt, dass unabhängig mindestens ein Greifsektor des vorderen und des hinteren Bereichs um einen variablen Korrekturwert verschoben wird, der vorab durch Messen der Winkelgeometrien der vorderen und hinteren Stirnseite beim Durchgang der Stirnseiten durch eine ortsfeste Detektionsstrecke (130) ermittelt wird.

2. Verfahren nach Anspruch 1, wobei der Korrekturwert in Abhängigkeit vom Unterschied zwischen den Winkelgeometrien der vorderen und hinteren Stirnseite bestimmt wird.

3. Verfahren nach Anspruch 1, wobei der Korrekturwert in Abhängigkeit vom Unterschied zwischen den Winkelgeometrien, die für die vordere und hintere Stirnseite jeweils gemessen werden, und einem vorgegebenen Referenzwert für den Winkel bestimmt wird.

4. Verfahren nach Anspruch 1, wobei die Greifsektoren des vorderen und hinteren Bereichs von ebenso vielen Greifelementen (201, 202, 203, 301, 302, 303) gegriffen werden, die auf einer beweglichen Transportvorrichtung (200, 300) angeordnet sind, und mindestens ein Greifelement (201, 301) mit einer Korrektureinheit für die Stirnseite der Lage (230, 330) ausgestattet ist, die den entsprechenden Greifsektor unabhängig verschieben kann.

5. Verfahren nach Anspruch 4, bei dem eine vordere Transporteinrichtung (200) und eine hintere Transporteinrichtung (300) verwendet wird und das die folgenden Schritte umfasst:
- Abrollen einer kontinuierlichen Gürtelbahn (B) von einem Zuführungssystem (101) zu einem Förderer (106),
- Schneiden der Gürtelbahn (B) entlang einer Linie parallel zu den Drähten der Lagen, um die vordere Stirnseite (4) zu lösen,
- Greifen des vorderen Bereichs (A) mit den Greifelementen (201, 202, 203), die auf der vorderen Transportvorrichtung (200) angeordnet sind,
- Abrollen einer vorgegebenen Länge (L1) der Gürtelbahn,
- Ermitteln der Winkelgeometrie der vorderen Stirnseite (4) beim Durchgang durch die ortsfeste Detektionslinie (130),
- Greifen des hinteren Bereichs (A') mit Hilfe der Greifelemente (301, 302, 303), die an der hinteren Transportvorrichtung (300) angeordnet sind,
- Schneiden der Gürtelbahn entlang einer Linie parallel zu den Drähten der Lagen, so dass die hintere Stirnseite (4') gelöst und eine Gürtellage (N) erhalten wird,
- Vorschieben der Gürtellage,
- Ermitteln der Winkelgeometrie der hinteren Stirnseite (4') beim Durchgang durch die ortsfeste Detektionsstrecke (130),
- Ausrichten der vorderen Stirnseite (4) und der hinteren Stirnseite (4'),
- Annähern der Auflegeform (104),
- Auflegen des vorderen Bereichs (A) auf die Auflegeform,
- Abrollen des Mittelbereichs (I) um die Auflegeform,
- Auflegen des hinteren Bereichs (A') auf die Auflegeform.

6. Verfahren nach Anspruch 4, bei dem nur eine Transporteinrichtung verwendet wird, das die folgenden Schritte umfasst:
- Abrollen einer kontinuierlichen Gürtelbahn (B) von einem Zuführungssystem (101) zu einem Förderer (106),
- Schneiden der Gürtelbahn (B) entlang einer Linie parallel zu den Drähten der Lagen, so dass die vordere Stirnseite (4) gelöst wird,
- Greifen des vorderen Bereichs (A) mit Hilfe von Greifelementen, die auf der Transporteinrichtung angeordnet sind,
- Abrollen der Gürtelbahn,
- Bestimmen der Winkelgeometrie der vorderen Stirnseite (4) beim Durchgang durch die ortsfeste Detektionsstrecke (130),
- Ausrichten der vorderen Stirnseite (4),
- Annähern der Auflegeform (104),
- Auflegen des vorderen Bereichs (A) auf die Auflegeform,
- weiteres Abrollen der Gürtelbahn (B), bis eine vorgegebene Länge der Lage (L1) erhalten wird, wobei weiterhin der Mittelbereich (I) um die Auflegeform gewickelt wird,
- Greifen des hinteren Bereichs (A') mit den Greifelementen, die an der Transporteinrichtung angeordnet sind,
- Schneiden der Gürtelbahn (B) entlang einer Linie parallel zu den Drähten der Lagen, so dass die hintere Stirnseite (4') gelöst wird und man eine Gürtellage (N) erhält,
- Vorschieben der Gürtellage, wobei weiterhin der Mittelbereich (I) um die Auflegeform gewickelt wird,
- Ermitteln der Winkelgeometrie der vorderen Stirnseite (4') beim Durchgang durch die ortsfeste Detektionsstrecke (130),
- Ausrichten der hinteren Stirnseite (4'),
- abschließendes Aufwickeln des Zwischenbereichs (I) um die Auflegeform,
- Auflegen des hinteren Bereichs (A') auf die Auflegeform.

7. Verfahren nach einem der Ansprüche 5 oder 6, bei dem das Vorschieben des Förderers und der Transporteinrichtungen mit der Drehung der Auflegeform synchron ist.

8. Verfahren nach Anspruch 5, wobei die Länge der Lage eingestellt wird, indem die beiden Transporteinrichtungen longitudinal in umgekehrten Richtungen um die gewünschten Korrekturwerte verschoben werden.

9. Verfahren nach einem der Ansprüche 5 oder 6, wobei die Länge der Lage eingestellt wird, indem die Synchronisation des Vorschubs des Förderers und der Transporteinrichtungen in Bezug auf die Drehung der Auflegeform in einem gegebenen Verhältnis verändert wird.

10. Verfahren nach einem der Ansprüche 5 oder 6, bei dem die Auflegeform einen gebogenen Scheitel (G) mit einem größeren Durchmesser (D2) und einem kleineren Durchmesser (D1) aufweist und das die folgenden Schritte umfasst:
- Abrollen und Schneiden der Gürtelbahn, um eine Lage (N) einer vorgegebenen Länge (L1) nahe des kleinsten Umfangs (π x D1) zu erhalten,
- unter Spannung Setzen der Lage durch Ziehen bis auf eine Länge (L2), so dass das Verhältnis k = L2/L1 im Bereich von 1 bis D2/D1 liegt,
- Ausrichten der Stirnseiten der Lagen, indem zu den Korrekturwerten, die durch Analyse der Winkelgeometrien ermittelt werden, die an der vorderen und hinteren Stirnseite jeweils gemessen werden, ein vorgegebener Wert addiert wird, wodurch die Winkeländerungen, die durch die Krümmung und das unter Spannung Setzen der Lage entstehen, kompensiert werden.

11. Verfahren nach einem der Ansprüche 5 oder 6, bei dem der vordere Bereich (A) und der hintere Bereich (A') in nur drei Greifsektoren unterteilt sind, die die Spitze (1, 1'), den zentralen Greifsektor (2, 2') und den Ansatz (3, 3') bilden und bei dem nur die Greifeinheit, die die Spitze (201, 301) greift, mit einer Korrektoreinrichtung für die Stirnseite (230, 330) ausgestattet ist, mit der die Stirnseite der Lage ausgerichtet werden kann, indem die Spitze der Lage unabhängig verschoben und gleichzeitig die Greifelemente, die den zentralen Greifsektor und den Ansatz greifen (202, 302, 203, 303) ortsfest gehalten werden.

12. Verfahren nach einem der Ansprüche 5 oder 6, bei dem die Gürtellage zunächst auf eine zwischengeschaltete magnetische Matte aufgelegt und die Magnetmatte dann auf die Auflegeform aufgelegt wird.

13. Entlang der Längsachse (XX') bewegliche Transportvorrichtung (200, 300) eines Förderers (106), die mindestens drei Greifelemente (201, 202, 203, 301, 302, 303) aufweist, die entlang einer Achse senkrecht zur Ebene der auf den Förderer aufgelegten Lage in eine Hebe- und Senkbewegung versetzt werden können, die sich auf einer schwenkbaren Traverse (209, 309) befinden und so angeordnet sind, dass sie die Spitze (1, 1'), den zentralen Greifsektor (2, 2') und den Ansatz (3, 3'), die die Stirnseite einer Gürtellage unterteilen, greifen und wieder lösen können, **dadurch gekennzeichnet, dass** nur das Greifelement (201, 301), das den Sektor der Spitze (1, 1') der Lage greifen soll, mit einer Korrektureinrichtung für die Stirnseite der Lage (230, 330) ausgestattet ist, die dieses Greifelement in einer Ebene parallel zur Ebene der auf den Förderer aufgelegten Lage unabhängig von den anderen Greifelementen um einen Korrekturwert, dessen Amplitude einstellbar ist, verschieben kann.

14. Transporteinrichtung nach Anspruch 13, **dadurch gekennzeichnet, dass** die Korrektureinrichtung für die Stirnseite der Lage eine geradlinige Bewegung in einer Richtung ausführt, die zwischen einer Richtung in etwa senkrecht zur Längsachse (XX') und einer Richtung in etwa senkrecht zur Stirnseite der Lage verläuft.

15. Transporteinrichtung nach Anspruch 13, **dadurch gekennzeichnet, dass** die Korrektureinrichtung für die Stirnseite der Lage eine Kreisbewegung um eine Achse in etwa senkrecht zur Ebene der auf den Förderer aufgelegten Lage ausführt.

16. Transporteinrichtung nach Anspruch 13, **dadurch gekennzeichnet, dass** die schwenkbare Traverse (209, 309) eine Drehung von 180 ° um eine Achse (VV') senkrecht zur Ebene des Förderers, die durch den Befestigungspunkt der Traverse (207, 307) hindurchgeht, ausführt.

17. Transporteinrichtung nach Anspruch 13, **dadurch gekennzeichnet, dass** das Greifelement einen oder mehrere Sauggreifer aufweist.

18. Transporteinrichtung nach Anspruch 13, **dadurch gekennzeichnet, dass** das Greifelement einen oder mehrere Elektromagnete umfasst.
